# EUROPÄISCHE PATENTSCHRIFT

(11) **EP 3 255 403 B1**
(45) Veröffentlichungstag und Bekanntmachung des Hinweises auf die Patenterteilung: **18.09.2019**
(21) Anmeldenummer: 17159772.7
(22) Anmeldetag: 08.03.2017
(51) Int. Cl.: G01M 7/02

(54) **SCHWINGLAST, PRÜFSTAND ZUM SCHWINGUNGSPRÜFEN UND VERFAHREN HIERFÜR**
VIBRATION LOAD, TEST BENCH FOR VIBRATION TESTING AND METHOD FOR SAME
CHARGE OSCILLANTE, BANC D'ESSAI DESTINÉ À CONTRÔLER L'OSCILLATION ET PROCÉDÉ ASSOCIÉ

(30) Priorität: 07.06.2016 AT 505202016
(43) Veröffentlichungstag der Anmeldung: 13.12.2017
(73) Patentinhaber: Prisma Engineering Maschinen- und Motorentechnik GmbH, 8041 Graz (AT)
(72) Erfinder: Gschweitl, Ernst, 8200 Gleisdorf (AT)
(74) Vertreter: Weiser & Voith Patentanwälte Partnerschaft

(56) Entgegenhaltungen:
- EP-A1- 2 833 119
- EP-A1- 2 927 660
- WO-A1-2009/139089
- DE-A1- 4 334 799

## Beschreibung

Die vorliegende Erfindung betrifft eine Schwinglast zum Schwingungsprüfen einer Welle, umfassend ein Lastelement für den Angriff zumindest eines Schwingungserregers. Die Erfindung betrifft ferner einen Prüfstand zum Schwingungsprüfen mit zumindest einer erfindungsgemäßen Schwinglast sowie ein Verfahren zum lösbaren Verankern der Schwinglast auf der Welle.

Wellen für Antriebe und Motoren, z.B. Antriebs-, Kurbel-, Nockenwellen od. dgl., sind zumindest zeitweise hohen Belastungen ausgesetzt und werden deshalb zum Nachweis ihrer Widerstandsfähigkeit, zu Zulassungszwecken und/oder für wissenschaftliche Untersuchungen intensiven Prüfungen, z.B. Festigkeitsprüfungen, unterworfen. Zur Festigkeitsprüfung wird eine zu prüfende Welle - oder ein Teil davon, z.B. eine Kröpfung einer Kurbelwelle - beispielsweise an einem Prüfstand zum Schwingungsprüfen einseitig eingespannt und an ihrem anderen Wellenende eine Schwinglast befestigt, oder die Welle wird auf dem Prüfstand zentral abgestützt und an jedem Wellenende jeweils eine Schwinglast verankert. An jeder Schwinglast greift ein Schwingungserreger an, z.B. ein Unwuchtmotor oder mehrere synchronisierte Unwuchtmotoren. Der Schwingungserreger belastet gemeinsam mit der Schwinglast die Welle in vorgegebener Schwingungsrichtung, -amplitude und/oder -frequenz durch mehrere Millionen oder mehrere zehn Millionen Lastwechsel hindurch auf Biegung und/oder Torsion meist bis zur Zerstörung der Welle.

Aufgrund der beim Schwinglastprüfen insbesondere großer Wellen über die gesamte Prüfdauer auftretenden sehr hohen Kräfte bzw. Momente kommt der Verankerung der Schwinglast(en) auf der Welle besondere Bedeutung zu: Diese muss einerseits besonders beständig und andererseits nach der Prüfung von der geprüften Welle lösbar sein.

Für das Schwingungsprüfen von Wellen mit kleinem und mittlerem Durchmesser oder geringer Festigkeit ist es bekannt, die Schwinglast aus zwei Hälften aufzubauen, welche um die Welle gelegt und gegeneinander verschraubt werden und dabei nach Art eines Klemmrings die Welle festklemmen. Für größere Wellen, z.B. Wellen für Schiffsantriebe mit Durchmessern von bis zu einigen hundert Millimetern, und die bei deren Schwingungsprüfung auftretenden hohen Kräfte bzw. Momente ist eine solche Verankerung ungeeignet, da es dabei zu einer ungünstigen Verteilung der mechanischen Spannungen in den Schwinglasthälften und in der Welle kommt und sie der auftretenden Belastung auch nicht dauerhaft standhält.

Aus der EP 2 927 660 ist bekannt, eine Schwinglast über einen an der Außenseite eines Rades eines zu prüfenden Radsatzes zentrisch befestigten Adapter zu montieren.

Die Erfindung setzt sich zum Ziel, eine Schwinglast und einen Prüfstand zum Schwingungsprüfen einer Welle und ein Verfahren zum lösbaren Verankern der Schwinglast auf einer Welle zu schaffen, welche einfach und kostengünstig sind und auch bei sehr hohen Kräften und/oder Momenten während des Schwingungsprüfens eine sichere und dennoch lösbare Verankerung der Schwinglast am Wellenende der zu prüfenden Welle erlauben.

Dieses Ziel wird gemäß einem ersten Aspekt der Erfindung mit einer Schwinglast der einleitend genannten Art erreicht, welche sich dadurch auszeichnet, dass das Lastelement eine zylindrische Öffnung hat, in welcher ein Ring mit konischer Öffnung zum lösbaren Verankern an einem ebenso konischen Wellenende der Welle aufgenommen ist, wobei der Ring an jeder Axialseite der konischen Öffnung einen umlaufenden Dichtring zum Abdichten gegenüber dem konischen Wellenende und zumindest eine von außen speisbare, zwischen den beiden Dichtringen in die konische Öffnung mündende Schmiermitteldüse umfasst.

Die Teilung der Schwinglast in ein Lastelement und einen in dessen zylindrischer Öffnung aufgenommenen Ring ermöglicht das voneinander weitgehend unabhängige Optimieren dieser beiden Komponenten auf die von ihnen jeweils wahrgenommenen, voneinander verschiedenen Funktionen. So kann die Schwinglast zugleich kostengünstig und einfach im Aufbau sein und dennoch den hohen Anforderungen an Sicherheit und Haltbarkeit der Verankerung an der Welle genügen. Die Verankerung wird insbesondere durch das Zusammenwirken des konischen Wellenendes und der konischen Öffnung des Rings bewirkt, welches eine gleichmäßige, symmetrische Spannungsverteilung und damit Materialbelastung in allen Teilen bewirkt. Ferner kann mithilfe von unter hohem Druck durch die Schmiermitteldüse hindurch eingebrachtem Schmiermittel beim Aufschieben der Schwinglast auf das konische Wellenende ein Kaltverschweißen der Oberflächen miteinander vermieden werden, so dass die Verankerung der Schwinglast an der Welle lösbar bleibt.

Besonders einfach und kostengünstig ist die Schwinglast aufzubauen, wenn das Lastelement eine Schwingplatte aus Baustahl ist.

Um die hohen Stabilitätsanforderungen zu erfüllen, ist bevorzugt der Ring aus hochvergütetem Stahl. Unter "hochvergütet" sind in diesem Zusammenhang Stähle mit einer Streckgrenze von etwa 1200 N/mm² oder höher zu verstehen.

Besonders günstig ist es, wenn der Ring, solange er nicht an dem Wellenende verankert ist, mit Spielpassung in der zylindrischen Öffnung aufgenommen ist. Dadurch sind Lastelement und Ring einfach herstellbar und montierbar. Dennoch sitzt das Lastelement sicher am Ring und somit auf der Welle, da der Ring beim Verankern auf dem Wellenende durch dessen Konizität so weit elastisch aufgedehnt wird, dass die Spielpassung in der zylindrischen Öffnung des Lastelements zu einer Presspassung wird. Trotz der deshalb im Vergleich zum Ring geringeren mechanischen Spannungen im Lastelement ist dessen sicherer Sitz aufgrund des größeren Durchmessers der zylindrischen Öffnung im Vergleich zur konischen Öffnung gewährleistet.

Um eine sichere und haltbare Verankerung der Schwinglast auf dem konischen Wellenende sicherzustellen, ist es vorteilhaft, wenn die konische Öffnung eine Konizität zwischen etwa 1:10 und etwa 1:100, bevorzugt zwischen etwa 1:20 und etwa 1:60, besonders bevorzugt etwa 1:30 hat.

Für die Dichtringe könnte beispielsweise jeweils eine Innenumfangsnut in der konischen Öffnung vorgesehen sein. Um einen einfachen Aufbau und folglich eine einfachere Herstellung des Rings zu ermöglichen, ist es hingegen günstig, wenn der Ring an jeder Axialseite der konischen Öffnung einen Innenabsatz hat, in welchem jeweils ein Dichtring aufgenommen ist.

Gemäß einer bevorzugten Ausführungsform hat jeder Dichtring in Richtung des Ringzentrums eine spitzwinkelige Kante zur tangentialen Anlage an dem konischen Wellenende. Aufgrund der dabei sehr geringen, nahezu linienförmigen Auflagefläche des Dichtrings am konischen Wellenende erzielt der Dichtring eine besonders gute Dichtwirkung auch bei hohem Druck des Schmiermittels.

Besonders günstig ist, wenn im Ring ferner über seinen Umfang verteilte Federelemente gelagert sind, von welchen jeder Dichtring in Richtung des Ringzentrums kraftbeaufschlagt ist. Alternativ dazu ist es vorteilhaft, wenn zwischen Innenabsatz und Dichtring ferner über dessen Umfang verteilte Keile axial eingeschoben sind, von welchen der Dichtring in Richtung des Ringzentrums kraftbeaufschlagt ist. Durch eine Kraftbeaufschlagung in solcher Richtung mithilfe der über den Umfang verteilten Federelemente bzw. Keile ergibt sich eine sehr gleichmäßige Dichtwirkung.

Um eine besonders feste Verankerung der Schwinglast auf der Welle lösen zu können, ist es ferner vorteilhaft, wenn der Ring zumindest eine weitere von außen speisbare, in die zylindrische Öffnung mündende Schmiermitteldüse umfasst. Eine solche weitere Schmiermitteldüse macht sich die radiale Zweiteiligkeit der erfindungsgemäßen Schwinglast vorteilhaft zunutze: So kann beim Abziehen der Schwinglast von der Welle zunächst das Lastelement vom Ring abgezogen werden, um diesen zu entlasten, so dass der Ring selbst später leichter vom Wellenende abgezogen werden kann.

Gemäß einem zweiten Aspekt schafft die Erfindung einen Prüfstand zum Schwingungsprüfen einer Welle, welcher eine Abstützung einer Welle umfasst und sich dadurch auszeichnet, dass er zumindest eine Schwinglast der vorgenannten Art, einen Antrieb zum axialen Aufschieben der Schwinglast mit der konischen Öffnung auf ein konisches Wellenende der Welle, eine an die Schmiermitteldüse des Rings angeschlossene Schmiermittelpumpe und zumindest einen Schwingungserreger für den Angriff an dem Lastelement umfasst. Bezüglich der Vorteile des Prüfstandes wird auf die voranstehenden Ausführungen zur Schwinglast verwiesen.

Dabei ist bevorzugt nicht nur eine Schwinglast für ein Wellenende, sondern für jedes der beiden Wellenenden der Welle eine eigene Schwinglast vorgesehen. Auf diese Weise ist einerseits die Abstützung der Welle, z.B. in der Wellenmitte, besonders einfach und andererseits ein synchrone Erregung der Schwinglasten an den beiden Wellenenden - erforderlichenfalls jeweils gegengleich - möglich, so dass beim Schwingungsprüfen im Vergleich zu einer einzigen Schwinglast eine wesentlich höhere Kraft bzw. ein wesentlich höheres Moment auf die Welle aufgeprägt werden kann.

Besonders günstig ist es, wenn der genannte Antrieb einen Spindeltrieb und für jede Schwinglast jeweils eine Hydraulikmutter umfasst. Der Spindeltrieb ermöglicht ein rasches, wenn erforderlich auch beidseitiges, Aufschieben der Schwinglast(en) zumindest bis die Dichtringe am konischen Wellenende dicht anliegen, worauf jede Schwinglast von der jeweiligen Hydraulikmutter mit besonders hoher Krafteinwirkung auf das Wellenende weiter aufgeschoben werden kann, so dass sich ein fester Sitz der Schwinglast(en) auf der Welle ergibt. Dabei kann der Spindeltrieb über die Hydraulikmutter(n) an der jeweiligen Schwinglast angreifen.

Gemäß einem dritten Aspekt schafft die Erfindung ein Verfahren zum lösbaren Verankern einer Schwinglast der vorgenannten Art an einer Welle mit konischem Wellenende, umfassend die Schritte:
axiales Aufschieben der Schwinglast mit der konischen Öffnung auf das konische Wellenende, zumindest bis die Dichtringe am konischen Wellenende dichtend anliegen;

Druckbeaufschlagen des zwischen dem Wellenende, der konischen Öffnung und den beiden Dichtringen ausgebildeten Spaltes mit Schmiermittel über die Schmiermitteldüse;
weiter Aufschieben der Schwinglast auf das Wellenende, bis die Schwinglast einen vorgegebenen Klemmsitz auf dem Wellenende erreicht; und
Beenden der Druckbeaufschlagung und Ablassen des Schmiermittels aus dem Spalt.

Zum Lösen der Verankerung insbesondere nach einem Schwingungsprüfen umfasst das Verfahren bevorzugt die weiteren Schritte:
Druckbeaufschlagen des Spalts mit Schmiermittel;
Abziehen der Schwinglast von der Welle, solange die Dichtringe am konischen Wellenende anliegen;
Beenden der Druckbeaufschlagung und Ablassen des Schmiermittels aus dem zwischen dem Wellenende und der konischen Öffnung ausgebildeten Spalt; und
weiter Abziehen der Schwinglast von dem Wellenende.

Durch das Druckbeaufschlagen des Spalts mit Schmiermittel unter hohem Druck wird das Abziehen der Schwinglast und der Welle wesentlich vereinfacht. Die Schwinglast ist somit vielfach wiederverwendbar, auch wenn die Welle im Verlauf des Schwingungsprüfen zerstört wurde.

Hinsichtlich der weiteren Vorteile und weiterer Ausführungsformen des Verfahrens wird auf die vorangegangen Ausführungen zur Schwinglast und zum Prüfstand verwiesen.

Die Erfindung wird nachstehend anhand eines in den beigeschlossenen Zeichnungen dargestellten Ausführungsbeispiels näher erläutert. In den Zeichnungen zeigen:
Fig. 1 eine Schwinglast gemäß der Erfindung, welche an einem konischen Wellenende einer Kurbelwelle verankert ist, in einem Schnitt entlang der Schnittlinie I-I von Fig. 2;
Fig. 2 die Schwinglast von Fig. 1 in einer Seitenansicht in Achsrichtung der Welle;
Fig. 3 das Detail A von Fig. 1 in vergrößertem Maßstab;
Fig. 4 ein schematisches Beispiel für einen Prüfstand zum Schwingungsprüfen einer Welle mit zwei Schwinglasten gemäß den Fig. 1 bis 3 in Frontansicht; und
die Fig. 5a bis 5c das Detail B des Prüfstandes von Fig. 4 vor dem Aufschieben der Schwinglast von Fig. 1 auf das konische Wellenende (Fig. 5a), in einer unvollständig aufgeschobenen Stellung (Fig. 5b) und in einer vollständig aufgeschobenen, verankerten Stellung (Fig. 5c), jeweils in einem Schnitt entlang der Achsrichtung der Welle.

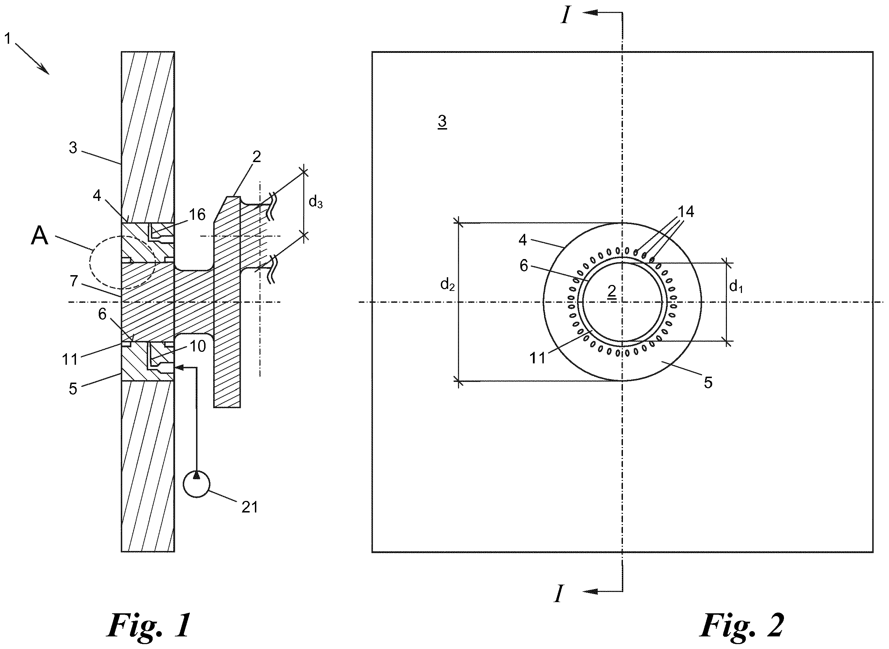

Die Fig. 1 bis 3 zeigen ein Beispiel für eine Schwinglast 1 zum Schwingungsprüfen einer Welle 2 - hier: einer Kurbelwelle 2 bzw. einer einzelnen Kröpfung davon. Die Schwinglast 1 umfasst ein Lastelement 3, welches im vorliegenden Beispiel eine rechteckige Schwingplatte aus Baustahl ist (Fig. 2). Das Lastelement 3 hat eine zylindrische Öffnung 4, in welcher ein Ring 5 aufgenommen ist. Im vorliegenden Beispiel ist der Ring 5 aus hochvergütetem Stahl, d.h. Stahl mit einer Streckgrenze von etwa 1200 N/mm² oder höher.

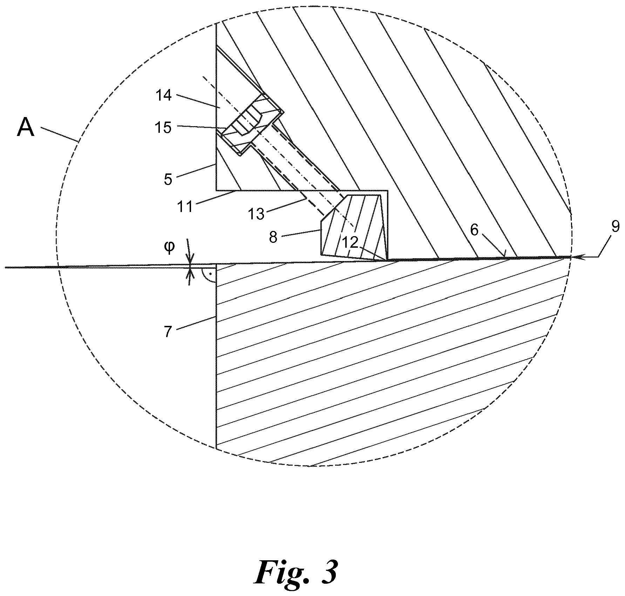

Der Ring 5 hat eine konische Öffnung 6, in welcher ein Wellenende 7 der Welle 2 lösbar verankert ist. Das konische Wellende 7 ist dabei an der Welle 2, z.B. durch Drehen oder Fräsen der Welle 2, geformt, oder - wie im Beispiel der Fig. 1 - auf die Kröpfung der Kurbelwelle aufgeschmiedet. An jeder Axialseite der konischen Öffnung 6 hat der Ring 5 einen umlaufenden Dichtring 8 (Fig. 3). Die Dichtringe 8 dichten einen zwischen dem konischen Wellenende 7 und der konischen Öffnung 6 ausgebildeten Spalt 9 ab. Der Ring 5 hat ferner zumindest eine zwischen den beiden Dichtringen 8 in die konische Öffnung 6, d.h. in den Spalt 9, mündende Schmiermitteldüse 10. Wie weiter unten ausführlich erläutert wird, ist die Schmiermitteldüse 10 von außen gespeist.

Im Beispiel von Fig. 1 ist das Lastelement 3 eine Schwingplatte von etwa 2000 mm x 2400 mm mit einer Dicke von etwa 200 mm; der (mittlere) Durchmesser d₁ der konischen Öffnung beträgt etwa 500 mm und der Durchmesser d₂ der zylindrischen Öffnung etwa 740 mm. Es versteht sich, dass die Schwinglast 1 je nach Erfordernis geeignete andere Abmaße haben kann und das Lastelement 3 keine Platte, insbesondere keine rechteckige Schwingplatte, sein muss, sondern als z.B. kreisrunde oder ovale Schwingplatte oder überhaupt z.B. hebelförmig ausgebildet sein kann und aus einem geeigneten anderen Material als Baustahl bestehen kann. Auch müssen Lastelement 3, Ring 5 und insbesondere Wellenende 7 im verankerten Zustand der Schwinglast 1 auf der Welle 2 nicht notwendigerweise zueinander bündig sein, sondern können in Axialrichtung unterschiedliche Erstreckungen haben.

Der Ring 5 könnte mit Presspassung in der zylindrischen Öffnung 4 des Lastelements 3 aufgenommen sein. Im vorliegenden Beispiel ist der Ring 5 hingegen mit Spielpassung in der zylindrischen Öffnung 4 aufgenommen, solange er nicht an dem Wellenende 7 verankert ist. Dabei ergibt sich dennoch eine Presspassung des Rings 5 in der zylindrischen Öffnung 4, wenn der Ring 5 infolge der Verankerung und der Konizität von Öffnung 6 und Wellenende 7 radial gedehnt wird; so trägt der hochvergütete Ring 5 den überwiegenden Anteil der mechanischen Spannungen infolge der Verankerung, wobei gleichzeitig das Lastelement 3 sicher mit dem Ring 5 verbunden ist.

Die Konizität der konischen Öffnung 6, und zugleich des Wellenendes 7, liegt in Abhängigkeit von den Kräften bzw. Momenten beim Schwingungsprüfen und folglich in Abhängigkeit von Durchmesser d₃, Form und Material der zu prüfenden Welle 2 zwischen etwa 1 : 10 und 1 : 100, bevorzugt zwischen etwa 1 : 20 und 1 : 60, besonders bevorzugt bei etwa bei 1 : 30, woraus ein Steigungswinkel ϕ von z.B. etwa 0,5° bis etwa 6° resultiert.

Gemäß Fig. 3 hat der Ring 5 an jeder Axialseite der konischen Öffnung 6 einen Innenabsatz 11, in welchem jeweils ein Dichtring 8 aufgenommen ist. Alternativ könnte der Dichtring 8 zum Beispiel in einer in der konischen Öffnung 6 jeweils umlaufenden Innenumfangsnut (nicht gezeichnet) aufgenommen sein.

Der Dichtring 8 hat gemäß Fig. 3 in Richtung des Ringzentrums, d.h. zum Spalt 9 hin, eine spitzwinkelige Kante 12 zur tangentialen Anlage an dem konischen Wellenende 7, woraus sich eine besonders geringe Auflagefläche und folglich eine hohe Dichtwirkung daran und an dem Innenabsatz 11 ergibt. Alternativ oder ergänzend könnte der Dichtring 8 z.B. zwei oder mehr dichtlippenartig ausgeführte Stufen zur tangentialen Anlage am konischen Wellenende 7 und/oder an dem Innenabsatz 11 haben.

Im Ring 5 sind optional über seinen Umfang verteilte Federelemente 13 gelagert, von welchem jeder Dichtring 8 in Richtung des Ringzentrums kraftbeaufschlagt ist. Jedes Federelement 13 könnte dabei z.B. in einer Sackbohrung sitzen (nicht gezeigt) oder in einer Bohrung 14 mithilfe einer Senkschraube 15 festgesetzt und von der Senkschraube 15 gegenüber dem jeweiligen Dichtring 8 vorgespannt sein. Zur gleichmäßigen Vorspannung der Dichtringe 8 sind mehrere Bohrungen 14 mit Federelementen 13 und Senkschrauben 15 über den Umfang des Rings 5 verteilt, z.B., wie in Fig. 2 gezeigt, 36 Bohrungen 14 oder sogar mehr.

Alternativ könnte der Dichtring 8 auch auf andere Weise in Richtung des Ringzentrums kraftbeaufschlagt sein, z.B. durch mehrere über den Umfang des Dichtrings 8 verteilte, zwischen Innenabsatz 11 und Dichtring 8 axial eingeschobene Keile od. dgl.

Optional hat der Ring 5 ferner zumindest eine weitere in die zylindrische Öffnung 4 mündende Schmiermitteldüse 16, welche ebenso wie die in die konische Öffnung 6 mündende Schmiermitteldüse 10 von außen gespeist wird. Es versteht sich, dass anstatt bloß jeweils einer Schmiermitteldüse 10, 16 jeweils mehrere Schmiermitteldüsen 10, 16 über den Umfang der zylindrischen bzw. konischen Öffnung 4, 6 verteilt sein können.

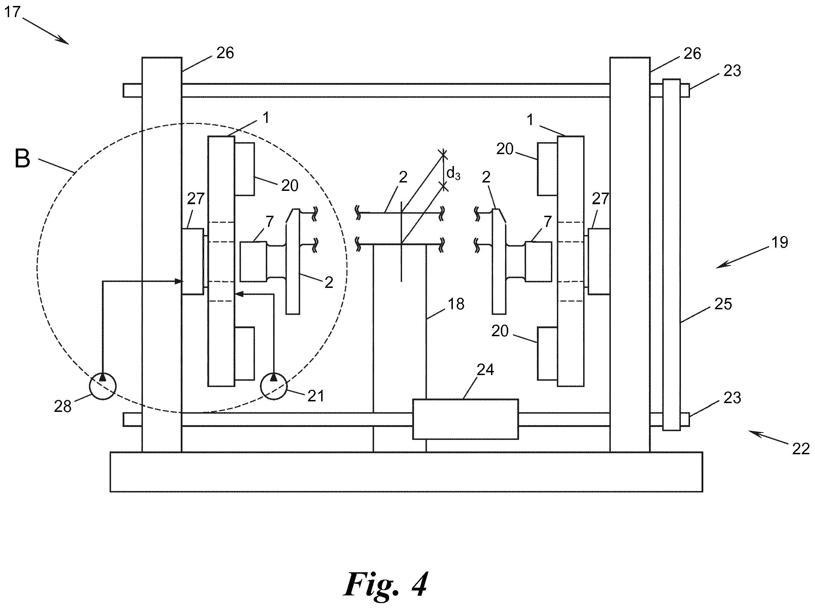

Gemäß Fig. 4 wird die Schwinglast 1 der Fig. 1 bis 3 an einem Prüfstand 17 zum Schwingungsprüfen einer Welle 2 - in diesem Beispiel wieder einer Kurbelwelle bzw. eines Abschnitts davon mit einer oder mehreren Köpfungen - eingesetzt. Die genannte Schwinglast 1 eignet sich dabei besonders für die Schwinglastprüfung bei sehr hohen Kräften bzw. Momenten, wie sie z.B. bei der Schwingungsprüfung von Antriebs- und/oder Kurbelwellen 2 großer Schiffsantriebe auftreten. Solche Wellen 2 haben Durchmesser d₃ von typisch mehreren hundert Millimetern, die Motoren bis zu 20 Zylinder, wobei die Wellen am Prüfstand 17 in oft mehreren Millionen oder sogar mehreren 10 Millionen Lastwechseln zerstörend geprüft werden. Insbesondere im Falle der Schwingungsprüfung von Kurbelwellen werden häufig bloß eine einzelne oder wenige Köpfungen der Kurbelwelle entnommen und für die Schwingungsprüfung, z.B. durch Aufschmieden eines konischen Endes oder spanende Bearbeitung der Wellenenden zum Erlangen der gewünschten Konizität, vorbereitet. Eine temporär stabile Verankerung der Schwinglasten 1 an den jeweiligen Wellenenden 7 ist Voraussetzung für die Schwingungsprüfung. Dazu kann die zu prüfende Welle 2 einseitig am Prüfstand eingespannt sein und nur am gegenüberliegenden Wellenende 7 eine Schwinglast 1 verankert sein; meistens, insbesondere beim Torsions-Schwingungsprüfen, wird hingegen an jedem der beiden Wellenenden 7 der zu prüfenden Welle 2 eine eigene Schwinglast 1 verankert.

Der Prüfstand 17 umfasst eine Abstützung 18 für die Welle 2, im Beispiel von Fig. 4 eine zentrale Abstützung 18. Ferner umfasst der Prüfstand 17 zumindest eine Schwinglast 1 für ein Wellenende 7, einen Antrieb 19 zum axialen Aufschieben der Schwinglast 1 mit der konischen Öffnung 6 auf das konische Wellenende 7 der Welle 2 und zumindest einen Schwingungserreger 20 für den Angriff am Lastelement 3.

Im Beispiel von Fig. 4 ist an jedem Wellenende 7 der Welle 2 jeweils eine Schwinglast 1 zum Verankern vorbereitet. An jeder der Schwinglasten 1 sind als Schwingungserreger 20 jeweils zwei Unwuchtmotoren fest montiert, deren Lauf beim Schwingungsprüfen gegenseitig und auf die Erfordernisse abgestimmt ist. Alternativ können auch andere Schwingungserreger 20 bzw. nur ein oder mehrere Unwuchtmotoren an der Schwinglast 1 montiert sein oder daran angreifen, wie dem Fachmann bekannt ist.

Der Prüfstand 17 umfasst ferner eine Schmiermittelpumpe 21, welche an die zumindest eine Schmiermitteldüse 10 des Rings 5 angeschlossen ist und diese speist. Im Falle zweier Schwinglasten 1 kann die Schmiermittelpumpe 21 an die Schmiermitteldüsen 10 beider Schwinglasten 1 angeschlossen sein, oder es kann für jede Schwinglast 1 eine separate Schmiermittelpumpe 21 vorgesehen sein.

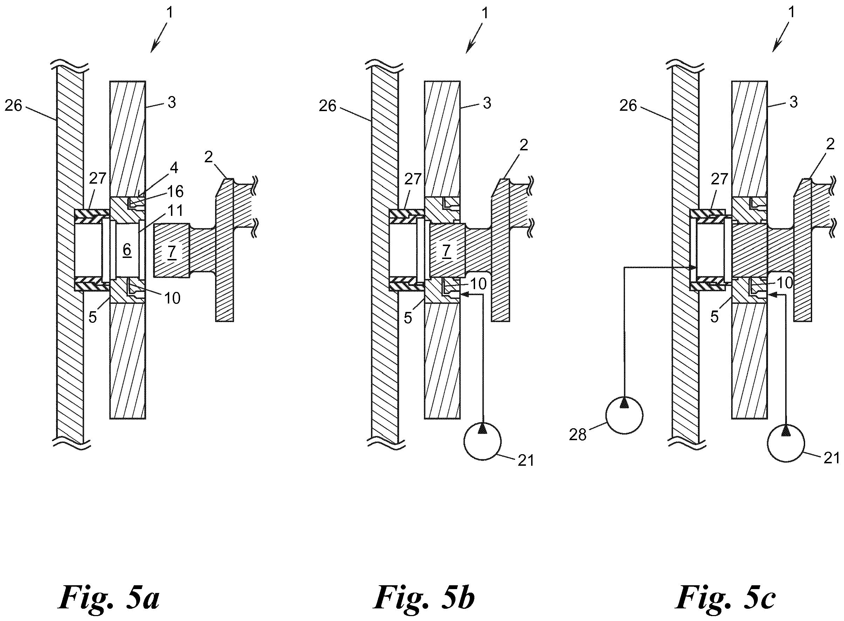

Anhand der Fig. 4 und 5a bis 5c wird im Folgenden beschrieben, auf welche Weise eine Schwinglast 1 lösbar an einer Welle 2 verankert wird.

Zur Vorbereitung des Verankerns wird die Welle 2 an der Wellenabstützung 18 fixiert und, falls erforderlich, z.B. mit deren Hilfe radial und axial am Prüfstand 17 ausgerichtet. Alternativ oder ergänzend dazu kann die jeweilige Schwinglast 1 radial und/oder axial ausgerichtet werden, um das folgende Verankern zu ermöglichen.

Den Zustand vor dem lösbaren Verankern der Schwinglast 1 an der Welle 2 zeigt Fig. 5a. Zum lösbaren Verankern wird die Schwinglast 1 zunächst mit der konischen Öffnung 6 auf das konische Wellenende 7 der Welle 2 axial aufgeschoben, zumindest bis die Dichtringe 8 am konischen Wellenende 7 dichtend anliegen (Fig. 5b). Dazu kann der Antrieb 19, wie in Fig. 4 schematisch dargestellt, einen Spindeltrieb 22 mit z.B. zwei oder vier Spindeln 23 haben, von welchen eine von einem Motor 24 direkt angetrieben und die andere(n) durch z.B. einen Riemen 25 geschleppt werden. Die Spindeln 23 treiben zwei Seitenwände 26 des Prüfstands 17, an welchen die Schwinglasten 1 lose gehalten sind.

Darauf wird der zwischen dem Wellenende 7, der konischen Öffnung 6 und den beiden Dichtringen 8 ausgebildete Spalt 9 mithilfe der Schmiermittelpumpe 21 über die Schmiermitteldüse 10 mit Schmiermittel druckbeaufschlagt. Der Schmiermitteldruck beträgt dabei einige hundert bis einige tausend bar.

Nun wird die auf dem Schmiermittel im Spalt 9 gleitende Schwinglast 1 auf das Wellenende 7 weiter aufgeschoben, bis die Schwinglast 1 einen vorgegebenen Klemmsitz auf dem Wellenende 7 erreicht. Für dieses weitere Aufschieben könnte bei geeigneter Auslegung wieder der Spindeltrieb 22 verwendet werden. Im Beispiel der Fig. 4 und 5a bis 5c hat der Prüfstand 17 dazu hingegen für jede Schwinglast 1 jeweils eine Hydraulikmutter 27, welche an der jeweiligen Seitenwand 26 abgestützt ist und mit Hilfe einer Hydraulikpumpe 28 das weitere Aufschieben in axialer Richtung durchführt. Die Hydraulikmutter 27 greift am Ring 5 an und presst diesen gleichsam auf das konische Wellenende 7 auf, wobei sich der Ring 5 radial ausdehnt und dabei einerseits als Grundlage für seine sichere Verankerung unter hoher Radialspannung am Wellenende 7 anliegt und andererseits einen festen Presssitz im Lastelement 3 erlangt. Es versteht sich, dass anstelle des Spindeltriebs 22 und/oder der Hydraulikmutter(n) 27 jeweils andere geeignete Linearantriebe eingesetzt werden könnten.

Fig. 5c zeigt das genannte Erreichen des vorgegebenen Klemmsitzes der Schwinglast 1 auf dem Wellenende 7. Der Klemmsitz kann dabei durch eine Position des Rings 5 am Wellenende 7 und/oder durch einen Druck der Hydraulikpumpe 28 vorgegeben sein.

Bei Erreichen des vorgegebenen Klemmsitzes wird die Druckbeaufschlagung der Schmiermitteldüse beendet und das Schmiermittel aus dem Spalt 9, z.B. über ein Ventil (nicht dargestellt), abgelassen, so dass die Schwinglast 1 sicher an der Welle 2 verankert ist.

Hernach kann die Hydraulikmutter 27 in ihre ursprüngliche Stellung zurückgezogen werden, um für die folgende Schwingungsprüfung ausreichend Spiel gegenüber der Schwinglast 1 zu haben. Der Prüfstand 17 ist nun bereit zum Schwingungsprüfen.

Um die Schwinglast 1 nach dem Schwingungsprüfen wieder aus der Verankerung an der Welle 2 zu lösen, wird zunächst der Spalt 9 über die Schmiermitteldüse 10 mit Schmiermittel druckbeaufschlagt, um danach die Schwinglast 1 von der Welle 2 abzuziehen, solange die Dichtringe 8 am konischen Wellenende 7 anliegen. Hierauf wird die Druckbeaufschlagung mit Schmiermittel beendet und das Schmiermittel aus dem zwischen dem Wellenende 7 und der konischen Öffnung 6 ausgebildeten Spalt 9 abgelassen. Hinterher kann die Schwinglast 1 vom Wellenende weiter, und somit vollends, abgezogen werden.

Umfasst der Ring 5 die genannte weitere Schmiermitteldüse 16, welche in die zylindrische Öffnung 4 mündet, so kann optional zur Vereinfachung des Lösens der Verankerung der Schwinglast 1 an der Welle 2 zunächst die zylindrische Öffnung 4 durch diese weitere Schmiermitteldüse 16, z.B. mit Hilfe der Schmiermittelpumpe 21 oder einer separaten Schmiermittelpumpe, druckbeaufschlagt und zunächst das Lastelement 3 vom Ring 5 abgezogen werden, so dass der Ring 5 in radialer Richtung nach außen nicht weiter vorgespannt ist, worauf das Abziehen des Rings 5 von der Welle 2 nach dem zuvor beschriebene Verfahren einfacher vonstatten geht.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Schwinglast (1) zum Schwingungsprüfen einer Welle (2) mit konischem Wellenende (7), umfassend ein Lastelement (3) für den Angriff zumindest eines Schwingungserregers (20), **dadurch gekennzeichnet, dass** das Lastelement (3) eine zylindrische Öffnung (4) hat, in welcher ein Ring (5) mit konischer Öffnung (6) zum lösbaren Verankern an dem ebenso konischen Wellenende (7) der Welle (2) aufgenommen ist, wobei der Ring (5) an jeder Axialseite der konischen Öffnung (6) einen umlaufenden Dichtring (8) zum Abdichten eines im an dem konischen Wellenende (7) verankerten Zustand des Rings (5) zwischen dem konischen Wellenende (7) und der konischen Öffnung (6) ausgebildeten Spalts (9) und zumindest eine zwischen den beiden Dichtringen (8) in die konische Öffnung (6) mündende Schmiermitteldüse (10), welche dazu ausgebildet ist, an eine Schmiermittelpumpe (21) angeschlossen und von dieser gespeist zu werden, umfasst.

2. Schwinglast (1) nach Anspruch 1, **dadurch gekennzeichnet, dass** das Lastelement (3) eine Schwingplatte aus Baustahl ist.

3. Schwinglast (1) nach Anspruch 1 oder 2, **dadurch gekennzeichnet, dass** der Ring (5) aus hochvergütetem Stahl ist.

4. Schwinglast (1) nach einem der Ansprüche 1 bis 3, **dadurch gekennzeichnet, dass** der Ring (5) in seinem nicht an dem Wellenende (7) verankerten Zustand mit Spielpassung in der zylindrischen Öffnung (4) aufgenommen ist.

5. Schwinglast (1) nach einem der Ansprüche 1 bis 4, **dadurch gekennzeichnet, dass** die konische Öffnung (6) eine Konizität zwischen etwa 1:10 und etwa 1:100, bevorzugt zwischen etwa 1:20 und etwa 1:60, besonders bevorzugt etwa 1:30 hat.

6. Schwinglast (1) nach einem der Ansprüche 1 bis 5, **dadurch gekennzeichnet, dass** der Ring (5) an jeder Axialseite der konischen Öffnung (6) einen Innenabsatz (11) hat, in welchem jeweils ein Dichtring (8) aufgenommen ist.

7. Schwinglast (1) nach einem der Ansprüche 1 bis 6, **dadurch gekennzeichnet, dass** jeder Dichtring (8) in Richtung des Ringzentrums zum Spalt (9) hin eine spitzwinkelige Kante (12) zur tangentialen Anlage an dem konischen Wellenende (7) hat.

8. Schwinglast (1) nach einem der Ansprüche 1 bis 7, **dadurch gekennzeichnet, dass** im Ring (5) ferner über seinen Umfang verteilte Federelemente (13) gelagert sind, von welchen jeder Dichtring (8) in Richtung des Ringzentrums kraftbeaufschlagt ist.

9. Schwinglast (1) nach einem der Ansprüche 1 bis 7, **dadurch gekennzeichnet, dass** zwischen Innenabsatz (11) und Dichtring (8) ferner über dessen Umfang verteilte Keile axial eingeschoben sind, von welchen der Dichtring (8) in Richtung des Ringzentrums kraftbeaufschlagt ist.

10. Schwinglast (1) nach einem der Ansprüche 1 bis 9, **dadurch gekennzeichnet, dass** der Ring (5) zumindest eine weitere in die zylindrische Öffnung (4) mündende Schmiermitteldüse (16), welche dazu ausgebildet ist, an eine Schmiermittelpumpe angeschlossen und von dieser gespeist zu werden, umfasst.

11. Prüfstand (17) zum Schwingungsprüfen einer Welle (2), umfassend eine Abstützung (18) für die Welle (2), **dadurch gekennzeichnet, dass** der Prüfstand (17) zumindest eine Schwinglast (1) nach einem der Ansprüche 1 bis 10, einen Antrieb (19) zum axialen Aufschieben der Schwinglast (1) mit der konischen Öffnung (6) auf ein konisches Wellenende (7) der Welle (2), eine an die Schmiermitteldüse (10) des Rings (5) angeschlossene Schmiermittelpumpe (21) und zumindest einen Schwingungserreger (20) für den Angriff an dem Lastelement (3) umfasst.

12. Prüfstand (17) nach Anspruch 11, **dadurch gekennzeichnet, dass** für jedes der beiden Wellenenden (7) der Welle (2) eine eigene Schwinglast (1) vorgesehen ist.

13. Prüfstand (17) nach Anspruch 11 oder 12, **dadurch gekennzeichnet, dass** der genannte Antrieb (19) einen Spindeltrieb (22) und für jede Schwinglast (1) jeweils eine Hydraulikmutter (27) umfasst.

14. Verfahren zum lösbaren Verankern einer Schwinglast (1) nach einem der Ansprüche 1 bis 10 an einer Welle (2) mit konischem Wellenende (7), umfassend die Schritte:
axiales Aufschieben der Schwinglast (1) mit der konischen Öffnung (6) auf das konische Wellenende (7), zumindest bis die Dichtringe (8) am konischen Wellenende (7) dichtend anliegen;
Druckbeaufschlagen des zwischen dem Wellenende (7), der konischen Öffnung (6) und den beiden Dichtringen (8) ausgebildeten Spaltes (9) mit Schmiermittel über die Schmiermitteldüse (10) ;
weiter Aufschieben der Schwinglast (1) auf das Wellenende (7), bis die Schwinglast (1) einen vorgegebenen Klemmsitz auf dem Wellenende (7) erreicht; und
Beenden der Druckbeaufschlagung und Ablassen des Schmiermittels aus dem Spalt (9).

15. Verfahren nach Anspruch 14, umfassend die weiteren Schritte:
Druckbeaufschlagen des Spalts (9) mit Schmiermittel;
Abziehen der Schwinglast (1) von der Welle (2), solange die Dichtringe (8) am konischen Wellenende (7) anliegen;
Beenden der Druckbeaufschlagung und Ablassen des Schmiermittels aus dem zwischen dem Wellenende (7) und der konischen Öffnung (6) ausgebildeten Spalt (9); und
weiter Abziehen der Schwinglast (1) von dem Wellenende (7) .

16. Verfahren nach Anspruch 14 oder 15 für einen Prüfstand (17) mit einem Spindeltrieb (22), einer Schmiermittelpumpe (21) und zumindest einer Hydraulikmutter (27), wobei das genannte axiale Aufschieben mithilfe des Spindeltriebs (22), das genannte Druckbeaufschlagen mithilfe der Schmiermittelpumpe (21) und das genannte weitere Aufschieben mithilfe der zumindest einen Hydraulikmutter (27) erfolgen.

## Claims

1. Vibration load (1) for vibration testing of a shaft (2) with a conical end (7), comprising a load element (3) capable of being acted upon by at least one vibration exciter (20), **characterized in that** the load element (3) has a cylindrical opening (4) in which a ring (5) with a conical opening (6) for releasably anchoring on the likewise conical shaft end (7) of the shaft (2) is accommodated, wherein the ring (5) has a circumferential sealing ring (8) on each axial side of the conical opening (6) for sealing a gap (9), which is formed between the conical shaft end (7) and the conical opening (6) when the ring (5) is anchored on the conical shaft end (7), and at least one lubricant nozzle (10) leading into the conical opening (6) between the two sealing rings (8), which lubricant nozzle (10) is configured to be connected to and fed by a lubricant pump (21).

2. Vibration load (1) according to claim 1, **characterized in that** the load element (3) is a vibration plate made of structural steel.

3. Vibration load (1) according to claim 1 or 2, **characterized in that** the ring (5) is made of tempered steel.

4. Vibration load (1) according to any one of the claims 1 to 3, **characterized in that** the ring (5), when it is not anchored on the shaft end (7), is received with clearance in the cylindrical opening (4).

5. Vibration load (1) according to any one of the claims 1 to 4, **characterized in that** the conical opening (6) has a taper between about 1:10 and about 1:100, preferably between about 1:20 and about 1:60, particularly preferably about 1:30.

6. Vibration load (1) according to any one of the claims 1 to 5, **characterized in that** the ring (5) has an inner shoulder (11) on each axial side of the conical opening (6), in which inner shoulder (11) a sealing ring (8) is accommodated.

7. Vibration load (1) according to any one of the claims 1 to 6, **characterized in that** each sealing ring (8) has an acute-angled edge (12) in the direction of the ring center towards the gap (9) for tangential contact with the conical shaft end (7) .

8. Vibration load (1) according to any one of the claims 1 to 7, **characterized in that** spring elements (13) are mounted in the ring (5) distributed around its circumference, by which spring elements (13) each sealing ring (8) is forced in the direction towards the ring center.

9. Vibration load (1) according to any one of the claims 1 to 7, **characterized in that** wedges, distributed around the circumference of ring (5), are inserted between the inner shoulder (11) and the sealing ring (8), by which wedges the sealing ring (8) is forced in the direction towards the ring center.

10. Vibration load (1) according to any one of the claims 1 to 9, **characterized in that** the ring (5) comprises at least one further lubricant nozzle (16) leading into the cylindrical opening (4), which further lubricant nozzle (16) is configured to be connected to and fed by a lubricant pump.

11. Test rig (17) for vibration testing of a shaft (2), comprising a support (18) for the shaft (2), **characterized in that** the test rig (17) comprises at least one vibration load (1) according to any one of the claims 1 to 10, a drive (19) for axially sliding the vibration load (1) with the conical opening (6) onto a conical end (7) of the shaft (2), a lubricant pump (21) connected to the lubricant nozzle (10) of the ring (5), and at least one vibration exciter (20) for acting on the load element (3).

12. Test rig (17) according to claim 11, **characterized in that** a separate vibration load (1) is provided for each of the two ends (7) of the shaft (2).

13. Test rig (17) according to claim 11 or 12, **characterized in that** the drive (19) is a spindle drive (22) and comprises a hydraulic nut (27) for each vibration load (1).

14. Method for releasably anchoring a vibration load (1) according to any one of the claims 1 to 10 on a shaft (2) with a conical end (7), comprising the steps of:
axially sliding the vibration load (1) with the conical opening (6) onto the conical shaft end (7), at least until the sealing rings (8) abut sealingly on the conical shaft end (7);
pressurizing the gap (9) between the shaft end (7), the conical opening (6) and the two sealing rings (8) with lubricant via the lubricant nozzle (10);
further sliding the vibration load (1) onto the shaft end (7), until the vibration load (1) reaches a predetermined press fit on the shaft end (7); and
terminating the pressurization, and draining the lubricant from the gap (9).

15. Method according to claim 14, comprising the further steps of:
pressurizing the gap (9) with lubricant;
pulling-off the vibration load (1) from the shaft (2) as long as the sealing rings (8) are in contact with the conical shaft end (7);
terminating the pressurization, and draining the lubricant from the gap (9) between the shaft end (7) and the conical opening (6); and
further pulling-off the vibration load (1) from the shaft end (7).

16. Method according to claim 14 or 15 for a test rig (17) with a spindle drive (22), a lubricant pump (21), and at least one hydraulic nut (27), wherein said axially sliding is effected by the spindle drive (22), said pressurizing is effected by the lubricant pump (21), and said further sliding is effected by the at least one hydraulic nut (27).

## Revendications

1. Charge pivotante (1) permettant le test par vibration d'un arbre (2) doté d'une extrémité d'arbre (7) conique, comprenant un élément de charge (3) pour l'engagement d'au moins un excitateur de vibrations (20), **caractérisée en ce que** l'élément de charge (3) a un orifice (4) cylindrique dans lequel est reçu un anneau (5) avec une orifice conique (6) pour un ancrage amovible sur l'extrémité d'arbre (7) de même conformation conique de l'arbre (2), où l'anneau (5) comprend, au niveau de chaque côté axial de l'orifice conique (6), un anneau d'étanchéité (8) périphérique pour assurer l'étanchéité au niveau d'une fente (9) formée entre l'extrémité d'arbre (7) conique et l'orifice conique (6) dans un état ancré de l'anneau (5) sur l'extrémité d'arbre (7) conique et au moins une buse de lubrifiant (10) débouchant dans l'orifice conique (6) entre les deux anneaux d'étanchéité (8), laquelle est conçue pour être raccordée sur une pompe de lubrifiant (21) et être alimentée par celle-ci.

2. Charge pivotante (1) selon la revendication 1, **caractérisée en ce que** l'élément de charge (3) est une plaque pivotante en acier de construction.

3. Charge pivotante (1) selon la revendication 1 ou 2, **caractérisée en ce que** l'anneau (5) est en acier fortement allié.

4. Charge pivotante (1) selon l'une des revendications 1 à 3, **caractérisée en ce que** l'anneau (5) est reçu dans l'orifice (4) cylindrique avec un ajustement avec jeu dans l'état non ancré sur l'extrémité d'arbre (7).

5. Charge pivotante (1) selon l'une des revendications 1 à 4, **caractérisée en ce que** l'orifice conique (6) a une conicité entre environ 1 : 10 et environ 1 : 100, de préférence entre environ 1 : 20 et environ 1 : 60, de manière particulièrement préférée d'environ 1 : 30.

6. Charge pivotante (1) selon l'une des revendications 1 à 5, **caractérisée en ce que** l'anneau (5) a un dénivelé intérieur (11) sur chaque côté axial de l'orifice conique (6) dans lequel chaque fois est reçu un anneau d'étanchéité (8).

7. Charge pivotante (1) selon l'une des revendications 1 à 6, **caractérisée en ce que** chaque anneau d'étanchéité (8) a une arête (12) avec un angle aigu en direction du centre de l'anneau vers la fente (9) pour un appui tangentiel contre l'extrémité d'arbre (7) conique.

8. Charge pivotante (1) selon l'une des revendications 1 à 7, **caractérisée en ce que** des éléments à effet ressort (13) distribués sur le pourtour sont logés en outre dans l'anneau (5), par lesquels chaque anneau d'étanchéité (8) est sollicité en direction du centre de l'anneau.

9. Charge pivotante (1) selon l'une des revendications 1 à 7, **caractérisée en ce qu'**en outre des coins distribués sur le pourtour sont insérés axialement entre le dénivelé intérieur (11) et l'anneau d'étanchéité (8), par lesquels l'anneau d'étanchéité (8) est sollicité en direction du centre de l'anneau.

10. Charge pivotante (1) selon l'une des revendications 1 à 9, **caractérisée en ce que** l'anneau (5) comprend au moins une autre buse de lubrifiant (16) débouchant dans l'orifice cylindrique (4), laquelle est conçue pour être raccordée à une pompe de lubrifiant et être alimentée par celle-ci.

11. Banc d'essai (17) permettant le test par vibration d'un arbre (2), comprenant un support d'appui (18) pour l'arbre (2), **caractérisé en ce que** le banc d'essai (17) comprend au moins une charge pivotante (1) selon l'une des revendications 1 à 10, un entraînement (19) pour la poussée axiale de la charge pivotante (1) avec l'orifice conique (6) sur une extrémité d'arbre (7) conique de l'arbre (2), une pompe de lubrifiant (21) raccordée sur la buse de lubrifiant (10) de l'anneau (5) et au moins un excitateur de vibrations (20) pour l'engagement sur l'élément de charge (3).

12. Banc d'essai (17) selon la revendication 11, **caractérisé en ce qu'**une charge pivotante (1) individuelle est prévue pour chacune des deux extrémités d'arbre (7) de l'arbre (2).

13. Banc d'essai (17) selon la revendication 11 ou la revendication 12, **caractérisé en ce que** ledit entraînement (19) comprend respectivement un entraînement à broche (22) et un écrou hydraulique (27) pour chaque charge pivotante (1).

14. Procédé d'ancrage amovible d'une charge pivotante (1) selon l'une des revendications 1 à 10 sur un arbre (2) doté d'une extrémité d'arbre (7) conique, comprenant les étapes :
de poussée axiale de la charge pivotante (1) avec l'orifice conique (6) sur l'extrémité d'arbre (7) conique, au moins jusqu'à ce que les anneaux d'étanchéités (8) se plaquent de manière étanche sur l'extrémité d'arbre (7) conique ;
de mise sous pression avec du lubrifiant dans la fente (9) formée entre l'extrémité d'arbre (7), l'orifice conique (6) et les deux anneaux d'étanchéité (8) par le biais de la buse de lubrifiant (10) ;
d'une autre poussée de la charge pivotante (1) sur l'extrémité d'arbre (7) jusqu'à ce que la charge pivotante (1) atteigne une position de serrage prédéterminée sur l'extrémité d'arbre (7) ; et
d'arrêt de la mise sous pression et de libération du lubrifiant hors de la fente (9).

15. Procédé selon la revendication 14, comprenant les nouvelles étapes :
de mise sous pression de la fente (9) avec du lubrifiant ;
de retrait de la charge pivotante (1) de l'arbre (2) tant que les anneaux d'étanchéité (8) sont appliqués sur l'extrémité d'arbre (7) conique ;
d'arrêt de la mise sous pression et de libération du lubrifiant hors de la fente (9) formée entre l'extrémité d'arbre (7) et l'orifice conique (6) ; et
de retrait complémentaire de la charge pivotante (1) de l'extrémité d'arbre (7).

16. Procédé selon la revendication 14 ou 15, destiné à un banc d'essai (17) doté d'un entraînement à broche (22), d'une pompe de lubrifiant (21) et d'au moins un écrou hydraulique (27), où ladite poussée axial a lieu à l'aide de l'entraînement à broche (22), ladite mise sous pression a lieu à l'aide de la pompe de lubrifiant (21) et ledit nouvelle poussée a lieu à l'aide de l'au moins un écrou hydraulique (27).
